# EUROPÄISCHE PATENTANMELDUNG

(11) **EP 2 703 834 A1**
(43) Veröffentlichungstag der Anmeldung: **05.03.2014**
(21) Anmeldenummer: 13004099.1
(22) Anmeldetag: 19.08.2013
(51) Int. Cl.: G01S 15/10, G01S 15/32

(54) **Verfahren zum quasi-kontinuierlichen Senden hydroakustischer Signale**

(30) Priorität: 30.08.2012 DE 102012017131
(71) Anmelder: Christian-Albrechts-Universität zu Kiel, 24118 Kiel (DE)
(72) Erfinder: Heute, Ulrich, Prof. Dr., 24226 Heikendorf (DE); Küter, Dennis, Dipl. Phys., 24226 Heikendorf (DE)
(74) Vertreter: von Seebach, Malte

(57) **Zusammenfassung**

Die Erfindung betrifft ein Verfahren zur Erfassung sich langsam bewegender Unterwasserobjekte auf der Grundlage eines zeitlich optimierten Sender-/Empfängereinsatzes durch quasi-kontinuierliches Senden hydroakustischer Signale. Es besteht aus dem Erzeugen, Aussenden, Auffangen und Auswerten eines zeitlich gesteuerten Sender-/Empfängereinsatzes durch dauerhaftes Aussenden eines nach einem Muster gepulsten Signals und weist die Schritte:
- Erzeugen eines Trägersignals mittels Generators (3),
- Bereitstellen der optimalen Folge mittels Codegenerators (4),
- Modulieren der bereitgestellten optimalen Folge mittels Sendesignalschalter (5),
- Aussenden der entstandenen Signalfolge mittels Transmitters (7),
- Auffangen des reflektierten Signals mittels Hydrofon (8),
- Auswerten des empfangenen Signals und
- Steuerung der Sendefolgen (1) auf, derart, dass die Empfangsfolgen (2) mittels Empfangssignalschalter (10), mittels Auswertung (12) und mittels Systemkopplung (11) über digitale Gatter so beeinflusst werden, dass die Empfangsfolgen (2) nicht in den Sendefolgen (1) zu liegen kommen.

## Beschreibung

Die Erfindung betrifft ein Verfahren nach dem Oberbegriff des Hauptanspruches zur Erfassung sich langsam bewegender Unterwasserobjekte auf der Grundlage eines zeitlich optimierten Sender-/Empfängereinsatzes durch quasi-kontinuierliches Senden hydroakustischer Signale.

Das Erfassen von Objekten unter Wasser, insbesondere von Tauchern, die sich langsam bewegen, ist in den letzten Jahren zunehmend wichtiger geworden. Unter dem Stichpunkt der Hafensicherheit wurde in den letzten Jahren zunehmend die Erkennung von sich einem Schiff nähernden Tauchern im Zusammenhang mit Terrorismus und Piraterie diskutiert.

Die Möglichkeit, dass Taucher unbefugt und unerkannt in ein umrandetes Seegebiet eindringen können, zählt dabei zu den bisher weitgehend ungelösten Problemstellungen der Sicherheitstechnik.

Die natürlichste Lösung besteht in der Anbringung von mechanischen Sperrvorrichtungen in Form von Gitternetzen oder Stahlvorhängen, die allerding einen reibungslosen Schiffsverkehr stark einschränken würden.

Eine weitere und technisch wesentlich elegantere und zum Stand der Technik zählende Lösung ist die Bereitstellung eines geeigneten Sonarsystems, um räumlich begrenzte Unterwassergebiete zu überwachen und Eindringlinge möglichst frühzeitig und zuverlässig detektieren zu können.

Im einfachsten Falle sendet ein Sender ein Signal aus, welches an einem Zielobjekt reflektiert wird und von einem Sensorarray als Empfänger empfangen wird. Aus den Laufzeitunterschieden in den Empfängern des Arrays lässt sich horizontal die Richtung bestimmen, aus der das Signal reflektiert wurde. Aus einer Kreuzkorrelation des empfangenen Signals mit einem Referenzsignal lässt sich die Laufzeit des Signals und somit die Entfernung zum Ziel ermitteln. Dabei soll selbstverständlich eine geringe Rate an Falschalarmen, die zum Beispiel durch Fische oder Treibgut ausgelöst werden können, realisiert werden.

Hochentwickelte klassische Sonar-Systeme arbeiten nach dem Prinzip, ein auf die Anwendung und auf die zu detektierenden Objekte optimiertes Signal endlicher Länge auszusenden und das darauf folgende Echo aufzuzeichnen und auszuwerten. Für die Dauer des Sendens ist der Empfänger ebenfalls nicht in der Lage ein Signal aufzuzeichnen, da das Sendesignal alle einfallenden Signale amplitudenmäßig überlagert. Das Sendesignal muss also möglichst kurz sein, weitestgehend dem zu erwartenden Objekt in Form und Entfernung angepasst sein und im Interesse einer hohen Genauigkeit für die Entfernungsbestimmung zum Zielobjekt auf die kleinste mögliche Länge reduziert werden.

Andererseits - ebenfalls Stand der Technik - ist ein langes Sendesignal wünschenswert, damit das Reflexionssignal entsprechend viel Energie enthält, um es aus dem Umgebungsrauschen mit einem guten Rausch-/Nutzsignalverhältnis für die weitere Signalverarbeitung separieren zu können. Um vergleichbar gute Rausch-/Nutzsignalabstände bei kurzen Sendesignalen zu erreichen, sind kurzzeitig entsprechend hohe Sendeleistungen erforderlich. Ein dauerhaftes Aussenden eines Signals um die Vorzüge der kontinuierlichen Auswertung des Empfangs nutzen zu können, was eine Detektion weit unterhalb der Rauschgrenze ermöglichen würde, ist nach dem heutigen Stand der Technik aufgrund der starken direkten akustischen Kopplung von Sender und Empfänger unter Wasser technisch nicht realisierbar. Dies liegt im Wesentlichen an der hierfür erforderlichen extrem hohen Dynamik des Empfängers, die sich aus der Konstellation des direkt empfangenen Signals zu Nutzsignalen entsprechender Ziele als Verhältnis ergibt.

Als Stand der Technik sind ebenfalls passive Akustik-Hörsysteme bekannt, bei denen ein Objekt erfasst und optional mit Hilfe des Rauschens beziehungsweise von Eigengeräuschen, welche es selbst emittiert/erzeugt, geortet wird oder welches es von einer natürlichen Rauschquelle reflektiert, um es für die Ortung zu nutzen. Das ist beim heutigen technischen Stand der Signalauswertung eine zweckmäßige Technik, da sie den Vorteil hat, die akustische Übertragung nur in Richtung zum Empfänger/Detektor nutzen zu können, wodurch die Empfängerdynamik gering gehalten werden kann. Des Weiteren ist für ein passives Sonarsystem von Nutzen, ein anderes aktives System, das als Nachteil den eigenen Empfänger während des Sendevorganges nicht nutzen kann, zu benutzen, um mittels der emittierten Sendeimpulse eine Objektdetektion/Objekterkennung vorzunehmen.

Beispielhafte Offenbarungen sind das US-Patent 6 160 758 [Scientific Innovations, Inc.], das ein Verfahren zur Ortung von Fremdsignalen, die bei der Reflexion vorgesehener, erwarteter Objekte entstehen, beschreibt, indem Autokorrelationsfunktionen anwendet werden, und das US-Patent 4 198 704 [United States of America, Navy], das ein System zur Ortung einer Strahlungsquelle beschreibt, bei der die Ausgänge mehrerer voneinander beabstandeter Detektoren aufeinander bezogen sind. Das US-Patent 3 978 445 betrifft ein weiteres derartiges Ortungssystem, in dem die Ausgänge von drei Hydrofonen kreuzkorreliert sind.

Im Stand der Technik werden aktive Sonarsysteme seit Jahrzehnten zur Exploration von Unterwasserregionen genutzt; auch zur Detektion von bewegten Objekten. Allerdings stellen umrandete oder teilweise umrandete Hafengebiete einen Sonderfall dar, der erheblich größere Herausforderungen bei der Objekterkennung birgt, als offene Seegebiete.

Typischerweise werden in Hafengebieten eine Vielzahl von Reflexionen erzeugt, die bei einem Schiff, das in einem Hafen liegt, auch in nächster Nähe zum Rumpf vorhanden sind.

Dies führt zu der Situation, dass man akustische Wellen, die von stationären oder langsam bewegten Objekten reflektiert werden, nur schlecht von denen der stationären Umgebung, wie Spundwänden, Bodenunebenheiten, benachbarten Schiffen, etc. trennen kann. Nach dem Stand der Technik werden daher störende Reflexionen für bewegte Objekte im Allgemeinen durch sogenannte Doppler-sensitive Signale unterdrückt.

Stand der Technik ist dabei, Signale mit konstanter Einhüllender [Constant Wave, CW] und Signale basierend auf Pseudozufallssequenzen [Pseudo-Random-Noise, PRN] zu verwenden. Allerdings ist keine der genannten Lösungen voll befriedigend. CW-Signale bewirken eine geringe räumliche Auflösung, während PRN-Signale sensitiv gegenüber schaltungstechnischen Ungenauigkeiten sind und eine hohe Komplexität der Vorrichtung mit sich bringen, weil eine große Korrelationsbank benötigt wird.

Frequenzmodulierte (FM)-Signale, die auch Chirp-Signale genannt werden, gehören ebenfalls zum Stand der Technik, sind ohne Zusatzmaßnahmen allerdings nicht Doppler-sensitiv. Sie haben also den Nachteil, dass ein vorgegebener Geschwindigkeitsbereich nicht ausgeblendet werden kann.

In der deutschen Patentanmeldung DE 43 17 039 A1 wird beispielsweise die Genauigkeit der Doppler-Erfassung durch Ansteigen und Abfallen der übertragenen Frequenz nach einer irrationalen Funktion vorgegeben. Die Auswertung mit Hilfe einer Anzahl von Referenzsignalen ist dabei komplex.

Allen genannten Verfahren und Methoden, sich langsam bewegende Unterwasserobjekte zu detektieren, ist gemeinsam nachteilig: entweder die direkte Kopplung von Sender und Empfänger, bei der es zu Signalüberschneidungen von reflektierten und gesendeten Signalen kommen kann, oder es sind längere Detektionszeiten für eine treffsichere Auswertungen erforderlich, da die hohen Signaldämpfungen der hydroakustischen Signale das Erreichen eines brauchbaren Signal-Nutzverhältnisses sehr erschwert. Bei einem Abstand zwischen Sender und Empfänger - so beide nicht als ein Array vereinigt sind - von beispielsweise 1 m, beträgt die Dämpfung auf diesem Empfangsweg 0 dB gegenüber der Dämpfung des Weges SenderZielobjekt und Zielobjekt-Empfänger bei einem Abstand einer Wegstrecke von 300 m und einer Sendefrequenz von 60 kHz pro Wegstrecke von ca. 56 dB.

Einen Ausweg, Signalüberschneidungen zu vermeiden und dennoch gute Signal-Nutzverhältnisse zu erreichen, bietet das Absenden sehr kurzer Sendeimpulse mit stark erhöhter Sendeleistung, was ebenfalls als nachteilig zu bewerten ist.

Aufgabe der Erfindung ist die direkte akustische Kopplung zwischen Sender und Empfänger bei quasi-kontinuierlichem Sendebetrieb mittels Schaltzyklen für den Sender und den Empfänger so zu umgehen, dass dennoch eine gute räumliche Zielauflösung bei geringen Sendeleistungen möglich ist.

Erfindungsgemäß wird dies durch ein Verfahren mit den Merkmalen des Hauptanspruches gelöst. Die Unteransprüche geben vorteilhafte Ausführungen der Erfindung wieder.

Das Verfahren zum quasi-kontinuierlichen Senden hydroakustischer Signale zur Erfassung sich langsam bewegender Objekte mittels Erzeugen, Aussenden, Auffangen und Auswerten eines zeitlich gesteuerten Sender-/Empfängereinsatzes durch dauerhaftes Aussenden eines nach einem Muster gepulsten Signals weist die Schritte:
- Erzeugen eines Trägersignals mittels Generators (3),
- Bereitstellen der optimalen Folge mittels Codegenerators (4),
- Modulieren der bereitgestellten optimalen Folge mittels Sendesignalschalter (5),
- Aussenden der entstandenen Signalfolge mittels Transmitters (7),
- Auffangen des reflektierten Signals mittels Hydrofon (8),
- Auswerten des empfangenen Signals und
- Steuerung der Sendefolgen (1) auf, derart, dass die Empfangsfolgen (2) mittels Empfangssignalschalter (10), mittels Auswertung (12) und mittels Systemkopplung (11) so beeinflusst werden, dass die Empfangsfolgen (2) nicht in den Sendefolgen (1) zu liegen kommen.

Für das Verfahren mittels hydroakustischer Signale zur Erfassung sich langsam bewegender Objekte, erfolgen Empfang und Senden als Schaltfolge wechselseitig verschachtelt.

Das Verfahren mittels hydroakustischer Signale zur Erfassung sich langsam bewegender Objekte erfolgt durch Optimierung der Schaltfolge auf einen konstanten Anteil an mittlerer Empfangsleistung von einem reflektierten Ziel.

Das Verfahren mittels hydroakustischer Signale zur Erfassung sich langsam bewegender Objekte begrenzt die Schaltfolge auf eine endlich große Periode (T), sodass entstehende Totzeiten mit der maximal möglichen Sendereichweite übereinstimmen.

Das Verfahren mittels hydroakustischer Signale zur Erfassung sich langsam bewegender Objekte erfolgt durch Variieren der Sendefolge (1) in ihren Schaltzeiten.

Das Verfahren mittels hydroakustischer Signale zur Erfassung sich langsam bewegender Objekte generiert die Sendefolge (1) nach der Zielobjektentfemung.

Das Verfahren mittels hydroakustischer Signale zur Erfassung sich langsam bewegender Objekte variiert die Sendefolge (1) aus der Zeitverschiebung der Empfangsfolge (2).

Das Verfahren mittels hydroakustischer Signale zur Erfassung sich langsam bewegender Objekte verwendet als Empfänger einen gesteuerten Lock-In-Verstärker.

Für das Verfahren mittels hydroakustischer Signale zur Erfassung sich langsam bewegender Objekte ist das Referenzsignal des gesteuerten Lock-In-Verstärkers die beim Empfang zu erwartende Frequenz.

Das Verfahren mittels hydroakustischer Signale zur Erfassung sich langsam bewegender Objekte erlaubt für horizontal orientierte Signale mit gesteuerten Lock-In-Verstärkern die Bestimmung der Signalrichtung.

Im Weiteren wird die Erfindung anhand von drei Figuren beschrieben. Dabei zeigen:
Fig. 1: den zeitlichen Versatz des empfangenen, reflektierten Trägersignals,
Fig. 2: den zeitlichen Ablauf des Empfangens und Sendens des Trägersignals, und
Fig. 3: das Blockschaltbild der Sende-/Empfangssignalverarbeitung.

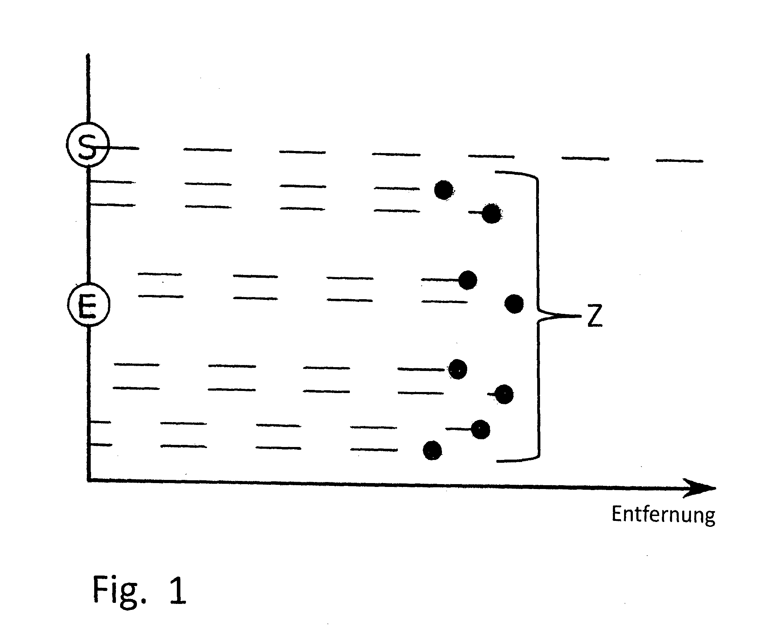

**Fig. 1** zeigt die einfachste Entkopplung von Sender und Empfänger. Hierbei bedeuten (S) als Sender für das Sendesignal, und (E) steht für die Empfänger der verschiedenen Empfangssignale. Die Striche markieren die räumliche Anordnung der Signale zu einem festen Zeitpunkt; die dunklen Punkte markieren die Zielobjekte (Z). Das Sendesignal propagiert nach rechts, aller weiteren Signale nach links in Richtung Empfänger (E).

Die Entkopplung von Sender (S) und Empfänger (E) besteht darin, beide periodisch abwechselnd für gleiche Zeiten (t) ein- und auszuschalten. Das Problem, das sich daraus ergibt, ist, dass es Bereiche gibt, in denen das Zielobjekt (Z) das Signal so reflektiert, dass dieses ganz oder teilweise am Empfänger (E) in einen Zeitbereich fällt, in dem gesendet wird. Es bilden sich also Totzonen in regelmäßigen Abständen innerhalb der Reichweite - also des Nutzbereiches des Systems - aus, in denen kein reflektiertes Signal empfangen werden kann.

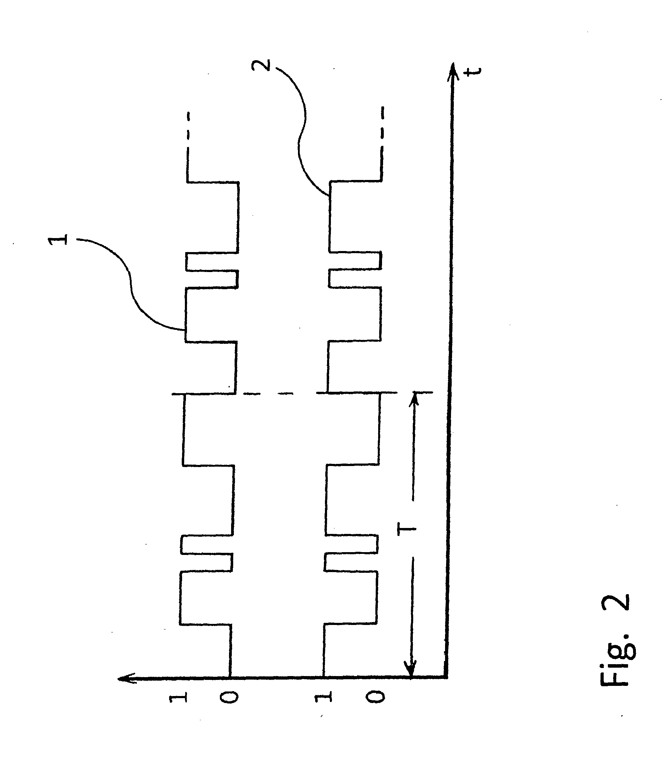

Aus diesem Grunde wird erfindungsgemäß eine zeitliche Signalabfolge für das Senden und Empfangen nach **Fig. 2** generiert. Hierin bedeuten (1) die Sendefolge, also die zeitliche Folge das gepulsten Sendesignal, (2) die zeitliche Folge für das gepulste Empfangen, also die Empfangsfolge, (T) die Periodenlänge der Signalfolge und (t) die Zeit. Aus Fig. 2 ist auch zu ersehen, die die starre Periodizität durch das einfache Schalten nach Fig.1 die Ursache für die Totzeiten im Empfang beseitigt, indem ein Signal gesendet wird, das in seinen Schaltzeiten variiert und dabei so optimiert ist, dass ein konstanter Anteil des reflektierten Signals unabhängig von der Entfernung des Zielobjektes empfangen wird. Folglich muss diese Periodizität gebrochen werden durch eine unkorrelierte Folge, welche eine perfekte Autokorrelation bietet. Da die Reichweite des Systems auch aufgrund seiner endlichen Sendeleistung beschränkt ist, muss nicht der hohe technische Aufwand betrieben werden, eine tatsächlich unendlich lange Folge zu generieren. Technisch bedingt wird diese Folge mit endlicher Länge ausgeführt - folglich ist auch dieses Signal periodisch - was in der Realität zu einer minimalen und einer maximalen Empfangsreichweite führt. Die Abfolge unterschiedlich langer Schaltzeiten wird nach n Zyklen wiederholt, wobei n eine natürliche Zahl darstellt. Die minimale Pulsbreite gibt hier die minimale Empfangsreichweite vor, da aus dem wechselseitigen Schalten von Sender und Empfänger bis zu einer bestimmten Entfernung nur Teile des gesendeten Signals wieder empfangen werden können. Die maximale Empfangsreichweite entsteht durch die Korrelation der gesendeten Folge nach n Zyklen mit der darauf folgenden identischen, aber invertierten Empfangssequenz.

Das reflektierte Signal erreicht den Empfänger in den Sendezeitpunktlücken, sodass der Empfang an diesen Stellen nicht zusammenbricht. Diese Länge wird also so eingestellt, dass sie den gewünschten Detektionsraum, also die Systemreichweite, abdeckt. Durch diese Art des Schaltens von Sender und Empfänger ist ein durchgängiger Empfang gesichert und das über die direkte Kopplung empfangene Signal fällt vollkommen heraus. Das Senden und Empfangen erfolgt gewissermaßen quasi-kontinuierlich, das heißt, es wird nach einem bestimmten, optimierten Muster abwechselnd gepulst durchgeführt.

Erfindungsgemäß handelt es sich hier, nicht wie bei herkömmlichen Systemen, um einen kurzen Signalpuls oder Ping und das darauffolgende Warten auf das Echo, sondern um eine Abfolge von Sende- und Empfangszeiten, bei der statistisch ein bestimmter Teil des Sendesignals empfangen wird. Ein Teil des Sendesignals geht hierbei folgerichtig verloren. Die besondere Abfolge des Sendens und Empfangens ist so gewählt, dass sich keine relevanten Totzonen ergeben, in denen Ziele nicht entdeckt würden; die Voraussetzung für die Funktion dieses Systems.

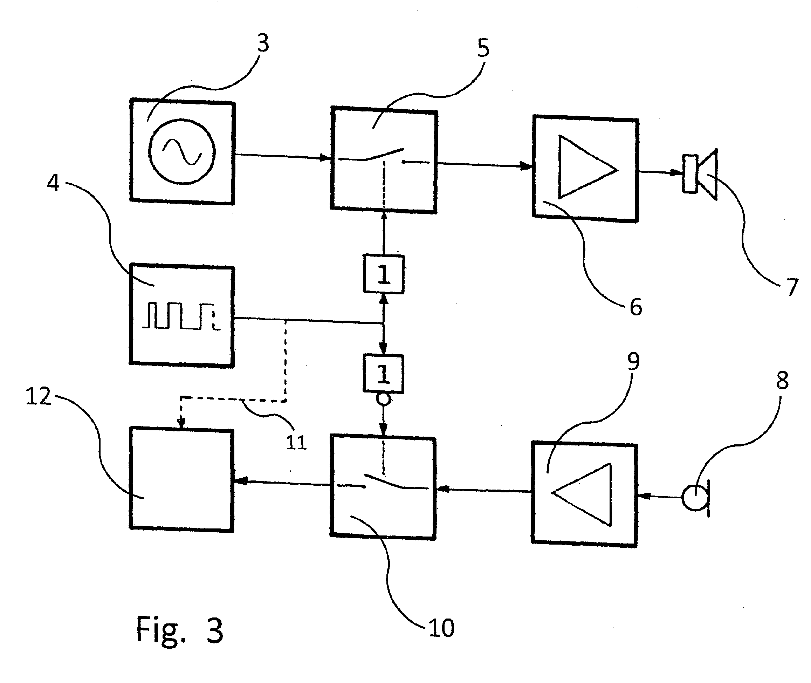

Das Verfahren, das Senden und Empfangen quasi-kontinuierlich nach dem beschriebenen, optimierten Muster abwechselnd gepulst durchführen zu können, wird erfindungsgemäß anhand der **Fig. 3** erläutert. Hierfür wird das Trägersignal aus einem Generator (3) mit der optimalen Folge, bereitgestellt durch einen Codegenerator (4), über den Sendesignalschalter (5) so moduliert, dass das über den Sendeverstärker (6) und einen Transmitter (7), der auch als Hydrofon ausgeführt sein kann, in den zu untersuchenden Hydro-Kanal gesendete. Das reflektierte Signal wird mittels eines Hydrofons (8) empfangen. Anschließend erfolgt eine Nachverstärkung des empfangenen Signals mittels eines Signalverstärkers (9), der über den Empfangssignalschalter (10) so geschaltet ist, dass kein direkter Empfang des Sendesignals möglich ist, die Auswertung (12) unter Einbezug des Modulationssignals über eine Systemkopplung (11) erfolgt, wobei durch die Signalfolge sichergestellt ist, dass entfernungsunabhängig ein Empfang der an den Zielen reflektierten Signale gesichert ist. Sendesignalschalter (5), Empfangssignalschalter (10), Codegenerator (4) und die Auswertung (12) sind mit der Systemkopplung (11) und digitalen Signalgattern so verbunden und konfiguriert gesteuert, dass die genannten Bedingen für die Sende- und Empfangssignale eingehalten werden.

Der klassische Ansatz - und damit auch Stand der Technik - zur Detektion kleiner, im Rauschen verborgener Signale, besteht in der Anwendung eines Korrelations-empfängers, der bei weißem Rauschen auch als Optimalfilter, Suchfilter oder Matchedfilter bekannt ist. Dabei wird das Empfangssignal mit der Sendefunktion korreliert. Die entstehende Autokorrelierte weist auch bei starkem Rauschen einen Spitzenwert auf, der aus dem Rauschen herausragt und detektiert werden kann. Im Falle eines kontinuierlichen Sinussignals wird aus der Korrelation eine Demodulation mit anschließender Mittelung, deren Zeitkonstante je nach gewünschter Signalauswertung gewählt wird. Dieses Prinzip ist aus dem Mittelwellenrundfunk als Überlagerungsempfänger, aus der Spektralanalyse als Suchton-Verfahren und aus der Messtechnik als Lock-In-Verstärker bekannt.

Diese Technik wird auch bei klassischen Standard-Sonaren verwendet, welche mit den eingangs erwähnten kurzen Sendeimpulsen - sogenannten Pings - arbeiten. Wegen der Kürze der Pings sind, wie schon erwähnt, relativ hohe Sendeleistungen erforderlich, damit sich das Korrelationssignal aus dem Rauschen heraushebt. Ein möglicher Ausweg besteht - wie bereits erwähnt - in der Anwendung längerer Sendesignale, dafür aber mit kleinerer Sendeleistung.

Da sich die Umgebung in einem ständigen Wechsel befindet und für die Signale Laufzeiten im Bereich von Sekunden zu erwarten sind, ist ein einfaches Integrieren der Pings für das gewünschte Detektionsverfahren bei Anwendung des Lock-In-Verstärkerprinzips nicht möglich.

Durch ein quasi-kontinuierliches Aussenden von Signalen, welches die Verwendung der erfindungsgemäß beschriebenen Folge im wechselseitigen Senden und Empfangen ermöglicht, ist die Voraussetzung für eine Signalauswertung mittels des Lock-In-Verstärkers nun erfindungsgemäß geschaffen.

Hierfür wird das empfangene Signal mit einem Referenzsignal gemischt. Das Referenzsignal besitzt die im Empfang zu erwartende Frequenz. Spektral betrachtet wird so das gesuchte Signal in den Gleichstrom-Bereich verschoben. Ein darauf folgender Tiefpass integriert vorhandene Signalanteile im verrauschten Empfangssignal bis über die Rauschgrenze hinaus und ermöglicht so die Detektion eines Ziels unterhalb der Rauschgrenze.

Um eine Richtung zu bestimmen aus der das Signal kam, wird das Ergebnis der Lock-In-Verstärkung in den einzelnen Kanälen ausgewertet. Das Resultat besteht aus einer Amplitude und einer Phase relativ zum Referenzsignal. Betrachtet man einen bestimmten Winkel, also einen entsprechenden Zeitversatz des Signals in den Empfängern untereinander, so wird als erstes dieser Zeitversatz korrigiert. Kommt nun das Signal aus dieser Richtung, so muss hier der Phasenwinkel relativ zum Referenzsignal der einzelnen empfangenen Signale an den Empfängern gleich sein. Eine einfache vektorielle Addition und anschließende Betragsbildung der Ergebnisse liefert einen Wert für die Intensität des Signals aus dieser Richtung.

Für die Bestimmung der Entfernung zum Zielobjekt kann die Folge des Einund Ausschaltens des Sendesignals verwendet werden. Diese liefert im Lock-In-Verstärker ein eindeutiges Muster in der Detektion. Eine Kreuzkorrelation des ausgewerteten Signals mit dem bekannten Sendemuster liefert einen relativen Zeitversatz, welcher der Laufzeit des hydroakustischen Signals durch das Wasser entspricht. Aus dieser Information lässt sich im Ergebnis die Entfernung zum Ziel gewinnen.

Ersetzt man als hydroakustischen Sender einen einfachen Transmitter (7) durch ein Array, welches ebenfalls horizontal orientiert ist, so lässt sich die durch den Lock-In-Verstärker gewonnene Information des Signals aus einer bestimmten Richtung direkt verwenden, um gezielt in die entsprechende Richtung die Sendeamplitude zu erhöhen.

Wird also ein Ziel unter einem bestimmten Winkel aufgrund seiner Entfernung nur zeitweise schwach detektiert, so kann mit dem Array exakt in diese Richtung die Sendeleistung erhöht werden, sodass das gezielte Verstärken des Sendesignals zu einer verbesserten Detektion des Zielobjektes führt.

Die Erfindung besteht in der hier speziell angewendeten Sende- und Empfangstechnik nach einem bestimmten, optimierten Muster und letztendlich in der speziell angewendeten Technik zur Detektion des Zielobjektes.

Die besondere Abfolge des Sendens und Empfangens ist also so gewählt, dass sich keine relevanten Totzonen ergeben, in denen Ziele nicht entdeckt würden. Durch diese quasi-kontinuierlichen Signale wird im Unterwasserbereich die beschriebene neuartige Auswertung mittels eines Lock-In-Verstärkers möglich.

Die Grenze der Detektierbarkeit von Zielobjekten, welche aufgrund eines geringen Rausch-/Nutzsignalabstandes nicht mehr detektiert werden konnten, wird gegenüber bekannten hydroakustischen Systemen zur Zieldetektion gesenkt und somit bei gleicher Sendeleistung eine Verbesserung in der Reichweite erlangt.

### Bezugszeichenliste

- 1: Sendefolge
- 2: Empfangsfolge
- 3: Generator
- 4: Codegenerator
- 5: Sendesignalschalter
- 6: Sendeverstärker
- 7: Transmitter
- 8: Hydrofon
- 9: Signalverstärker
- 10: Empfangssignalschalter
- 11: Systemkopplung
- 12: Auswertung
- E: Empfänger
- S: Sender
- T: Periodenlänge
- t: Zeit
- Z: Zielobjekte

## Patentansprüche

1. Verfahren zum quasi-kontinuierlichen Senden hydroakustischer Signale zur Erfassung sich langsam bewegender Objekte mittels Erzeugen, Aussenden, Auffangen und Auswerten eines zeitlich gesteuerten Sender-/Empfängereinsatzes, **gekennzeichnet durch** dauerhaftes Aussenden eines nach einem Muster gepulsten Signals mit den Schritten:
- Erzeugen eines Trägersignals mittels Generators (3),
- Bereitstellen der optimalen Folge mittels Codegenerators (4),
- Modulieren der bereitgestellten optimalen Folge mittels Sendesignalschalter (5),
- Aussenden der entstandenen Signalfolge mittels Transmitters (7),
- Auffangen des reflektierten Signals mittels Hydrofon (8),
- Auswerten des empfangenen Signals und
- Steuerung der Sendefolgen (1), derart, dass die Empfangsfolgen (2) mittels Empfangsschalter (10), mittels Auswertung (12) und mittels Systemkopplung (11) so beeinflusst werden, dass die Empfangsfolgen (2) nicht in den Sendefolgen (1) zu liegen kommen.

2. Verfahren zum quasi-kontinuierlichen Senden hydroakustischer Signale zur Erfassung sich langsam bewegender Objekte nach Anspruch 1, **dadurch gekennzeichnet, dass** Empfang und Senden als Schaltfolge wechselseitig verschachtelt erfolgen.

3. Verfahren zum quasi-kontinuierlichen Senden hydroakustischer Signale zur Erfassung sich langsam bewegender Objekte nach Anspruch 1 oder 2, **dadurch gekennzeichnet, dass** die Schaltfolge auf einen konstanten Anteil an mittlerer Empfangsleistung von einem reflektierten Ziel optimiert ist.

4. Verfahren zum quasi-kontinuierlichen Senden hydroakustischer Signale zur Erfassung sich langsam bewegender Objekte nach einem der Ansprüche 1 bis 3, **dadurch gekennzeichnet, dass** die Schaltfolge auf eine endlich große Periode (T) begrenzt ist, sodass entstehende Totzeiten mit der maximal möglichen Sendereichweite übereinstimmen.

5. Verfahren zum quasi-kontinuierlichen Senden hydroakustischer Signale zur Erfassung sich langsam bewegender Objekte nach Anspruch 1 oder 2, **dadurch gekennzeichnet, dass** die Sendefolge (1) in ihren Schaltzeiten variiert ist.

6. Verfahren zum quasi-kontinuierlichen Senden hydroakustischer Signale zur Erfassung sich langsam bewegender Objekte nach einem der Ansprüche 1, 2 und 5, **dadurch gekennzeichnet, dass** die Sendefolge (1) nach der Zielobjektentfernung generiert wird.

7. Verfahren zum quasi-kontinuierlichen Senden hydroakustischer Signale zur Erfassung sich langsam bewegender Objekte nach einem der Ansprüche 1, 2, 5 und 6, **dadurch gekennzeichnet, dass** die Sendefolge (1) aus der Zeitverschiebung der Empfangsfolge (2) variiert wird.

8. Verfahren zum quasi-kontinuierlichen Senden hydroakustischer Signale zur Erfassung sich langsam bewegender Objekte nach Anspruch 1, **dadurch gekennzeichnet, dass** der Empfänger einen gesteuerten Lock-In-Verstärker darstellt.

9. Verfahren zum quasi-kontinuierlichen Senden hydroakustischer Signale zur Erfassung sich langsam bewegender Objekte nach Anspruch 1 oder 8, **dadurch gekennzeichnet, dass** das Referenzsignal des gesteuerten Lock-In-Verstärkers die beim Empfang zu erwartende Frequenz ist.

10. Verfahren zum quasi-kontinuierlichen Senden hydroakustischer Signale zur Erfassung sich langsam bewegender Objekte nach einem der Ansprüche 1, 8 und 9, **dadurch gekennzeichnet, dass** für horizontal orientierte Signale gesteuerte Lock-In-Verstärker die Bestimmung der Signalrichtung möglich machen.
